# EUROPEAN PATENT APPLICATION

(11) **EP 2 594 458 A2**
(43) Date of publication of application: **22.05.2013**
(21) Application number: 12192533.3
(22) Date of filing: 14.11.2012
(51) Int. Cl.: B62D 5/04, B62D 7/15

(54) **Four-wheel steering control system**

(30) Priority: 18.11.2011 JP 2011252772
(71) Applicant: JTEKT CORPORATION, Osaka-shi Osaka 542-8502 (JP)
(72) Inventor: Ishihara, Atsushi, Osaka-shi, Osaka 542-8502 (JP)
(74) Representative: Winter, Brandl, Fürniss, Hübner, Röss, Kaiser, Polte - Partnerschaft

(57) **Abstract**

A four-wheel steering control system includes: a torque sensor (10) that detects a steering torque based on an operation of a steering member (2); a steering angle sensor (4) that detects a steering angle; a steering assist control unit (31) that calculates an assist force for steering front wheels based on the value detected by the torque sensor (10); and a steered system control unit (41) that executes steered control on rear wheels based on the value detected by the steering angle sensor (4) or the value detected by the torque sensor (10). When it is determined that there is a failure in a function of the steering assist control unit (31), the steered system control unit (41) executes the steered control such that the rear wheels are steered only on the side where the steered angle of the rear wheels is opposite in phase from the steering angle of the steering member (2).

## Description

### BACKGROUND OF THE INVENTION

### Field of the Invention

The invention relates to a four-wheel steering control system that stabilizes the behavior of a vehicle.

### Discussion of Background

There is a power steering system that generates a steering assist force that corresponds to a steering torque that is applied to a steering wheel, by controlling an electric or hydraulic actuator on the basis of the steering torque. The power steering system is configured such that a steering torque applied to the steering wheel and a vehicle speed are detected and an actuator control circuit computes a driving signal that corresponds to the steering torque and the vehicle speed obtained from the detection signals and controls an actuator based on the driving signal. In this way, it is possible to execute appropriate steering assist control based on the steering torque and the vehicle speed. US Patent No. 5067577 describes a four-wheel steering system that controls rear wheels such that the rear wheels are controlled to be steered in the same direction as front wheels or in the opposite direction from the front wheels depending on a vehicle speed when a vehicle makes a turn.

Sometimes, malfunctions occur in a power steering system. For example, malfunctions in an electric power steering system include a malfunction of an electric motor, a malfunction of a torque sensor, and a malfunction of a control unit that drives the electric motor. Malfunctions in a hydraulic power steering system include a malfunction of a hydraulic pump and leakage of oil. If the power steering system malfunctions, there is a possibility that a steering wheel becomes heavy (the steering wheel becomes hard to rotate) while a vehicle is travelling and it is difficult to control the steering and vehicle turn as intended by a driver.

Japanese Patent Application Publication No. 2-185866 (JP 2-185866 A) describes a four-wheel steering system that controls the steered angle ratio between front wheels and rear wheels such that the front wheels and the rear wheels are steered only in the same direction on the basis of a travelling state when a control system malfunctions. However, the control described in JP 2-185866 A is executed mainly to improve safety during high-speed travelling.

### SUMMARY OF THE INVENTION

The invention provides a four-wheel steering control system that allows a vehicle to make a turn as intended by a driver by utilizing the steered function of a four-wheel steering system even if a power steering system malfunctions, thereby stabilizing the behavior of the vehicle.

According to a feature of an example of the invention, with a four-wheel steering control system, when a steering member becomes heavy (hard to rotate) due to a malfunction of a steering assist control unit that computes an assist force for steering one of a pair of front wheels and a pair of rear wheels based on at least one of a value detected by a torque sensor that detects a steering torque and a value detected by a steering angle sensor that detects a steering angle of a steering member, the other one of the pair of front wheels and the pair of rear wheels is controlled to be steered only on a side where the steered angle of the other one of the pair of front wheels and the pair of rear wheels is opposite in phase from the steering angle of the steering member, based on at least one of the value detected by the torque sensor and the value detected by the steering angle sensor.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a schematic plan view that shows the schematic configuration of a four-wheel steering control system according to an embodiment of the invention;
FIG. 2 is a control block diagram of a steering assist control unit;
FIG. 3 is a control block diagram of a steered system control unit;
FIG. 4 is a graph of a target rear wheel steered angle (δr^{*}) in normal times, with respect to a vehicle speed.
FIG. 5 is a graph of a target rear wheel steered angle (δr^{*}), which is employed when the steering assist control unit malfunctions;
FIG. 6 shows a relationship between the direction (phase) of front tires Tfr, Tfl and the direction (phase) of rear tires Trr, Trl (opposite directions (phases));
FIG. 7 shows a relationship between the direction (phase) of the front tires Tfr, Tfl and the direction (phase) of the rear tires Trr, Trl (same direction (phase)); and
FIG. 8 shows the direction (phase) of the rear tires Trr, Trl when the steering assist control unit malfunctions (opposite direction (phase)).

### DETAILED DESCRIPTION OF EMBODIMENTS

Hereinafter, embodiments of the invention will be described with reference to the accompanying drawings.

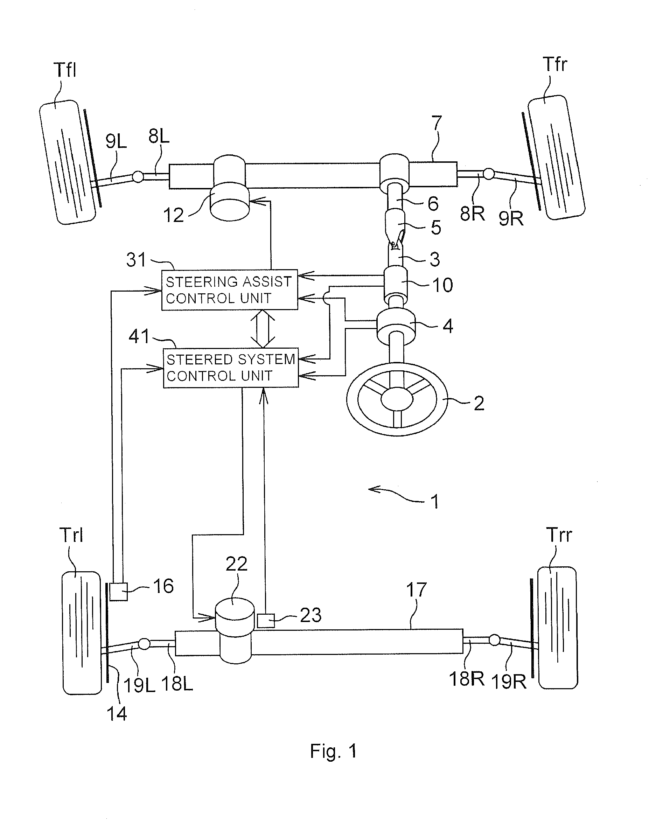

FIG. 1 is a schematic plan view that shows the schematic configuration of a four-wheel steering control system 1. The four-wheel steering control system 1 includes a steering member 2 that is connected to one end of a steering shaft 3. A steering angle sensor 4 and a torque sensor 10 are provided on the steering shaft 3. The steering angle sensor 4 detects a steering angle δf of the steering member 2. The torque sensor 10 detects a steering torque Th based on the rotation of the steering member 2. The steering angle sensor 4 is, for example, a sensor that detects the rotation angle of the steering shaft 3 by detecting a magnetic field of a multipolar magnet provided along the circumference of the steering shaft 3 of the steering member 2 with the use of a Hall sensor. The torque sensor 10 is installed at a middle portion of the steering shaft 3. The torque sensor 10 is a sensor that detects the steering torque Th based on the rotation of the steering member 2, on the basis of a relative rotation angle between upper and lower split portions of the steering shaft 3, which are rotatably coupled to each other via a torsion bar. The other end of the steering shaft 3 is coupled to a universal joint 5, and is coupled to front tires Tfr, Tfl via a steering mechanism.

The steering mechanism includes a pinion shaft 6, a front wheel rack shaft 7, and knuckle arms 9R, 9L. The front wheel rack shaft 7 serves as a front wheel steered shaft. The front wheel rack shaft 7 is in mesh with a pinion provided at the distal end of the pinion shaft 6, and extends in the lateral direction of a vehicle. The knuckle arms 9R, 9L are respectively coupled to a pair of end portions of the front wheel rack shaft 7 via tie rods 8R, 8L. A steering assist electric motor 12 is coupled to the front wheel rack shaft 7 via a gear device. The front wheel rack shaft 7 is urged by the steering assist electric motor 12 rightward or leftward in response to, for example, a signal indicating the torque detected by the torque sensor 10. Thus, a steering assist force is applied. Note that the steering assist electric motor 12 may be installed on the steering shaft 3.

One of rotors 14 of front wheels or rear wheels is provided with a wheel speed sensor 16 that is used to estimate a vehicle speed by detecting the rotation speed of the corresponding wheel. The wheel speed sensor 16 is a sensor that reads the rotation speed of the rotor 14 of the wheel, and a vehicle speed v is detected by multiplying the read rotation speed by the effective rotation radius of the tire. A steering mechanism for rear tires Trr, Trl includes a rear wheel rack shaft 17 and knuckle arms 19R, 19L. The rear wheel rack shaft 17 serves as a rear wheel steered shaft, and extends in the lateral direction of the vehicle. The knuckle arms 19R, 19L are respectively coupled to a pair of end portions of the rear wheel rack shaft 17 via tie rods 18R, 18L.

A steered system electric motor 22 is coupled to the rear wheel rack shaft 17 via a gear device. The rear wheel rack shaft 17 is moved rightward or leftward by the steered system electric motor 22. Thus, the rear wheels are steered. Furthermore, a vehicle body is provided with a rear wheel steered angle sensor 23. The rear wheel steered angle sensor 23 is used to detect the steered angle of the rear wheels by detecting the displacement of the rear wheel rack shaft 17 or the rotation angle of the steered system electric motor 22.

A steering assist control unit 31 executes drive control of the electric motor 12. Detection signals from the above-described steering angle sensor 4, torque sensor 10 and wheel speed sensor 16 are input into the steering assist control unit 31. Note that information about the vehicle speed v may be acquired via an in-vehicle LAN (CAN). The steering assist control unit 31 carries out appropriate steering assist based on a situation where steering is performed and a vehicle speed by driving the steering assist electric motor 12 on the basis of the steering torque detected by the torque sensor 10 and the vehicle speed.

The steering assist control unit 31 is connected to a steered system control unit 41 via the in-vehicle LAN (CAN) or a direct data link. The above-described rear wheel steered angle sensor 23, steering angle sensor 4 and wheel speed sensor 16 are connected to the steered system control unit 41. Note that, when the information about the vehicle speed v can be acquired via the in-vehicle LAN (CAN), the steered system control unit 41 need not be connected directly with the wheel speed sensor 16. When the steered system control unit 41 is designed to operate on the basis of the torque detected by the torque sensor 10, the torque sensor 10 is connected to the steered system control unit 41 instead of the steering angle sensor 4 or in addition to the steering angle sensor 4.

When a control operation of the steering assist control unit 31 is properly performed, the steering assist control unit 31 periodically transmits a signal indicating that it is operating properly to the steered system control unit 41 via the in-vehicle LAN or via the direct data link. The steered system control unit 41 calculates a target rear wheel steered angle δr^{*} on the basis of the vehicle speed v detected by the wheel speed sensor 16 and the steering angle δf detected by the steering angle sensor 4, and executes drive control of the steered system electric motor 22 such that the target steered angle vr^{*} is achieved.

Note that, in the present embodiment, the steering angle δf is processed as a positive value when the steering member 2 is rotated to the left from a neutral position, and is processed as a negative value when the steering member 2 is rotated to the right from the neutral position. The torque detected by the torque sensor 10 is processed as a positive value when a torque is applied to the left, and is processed as a negative value when a torque is applied to the right.

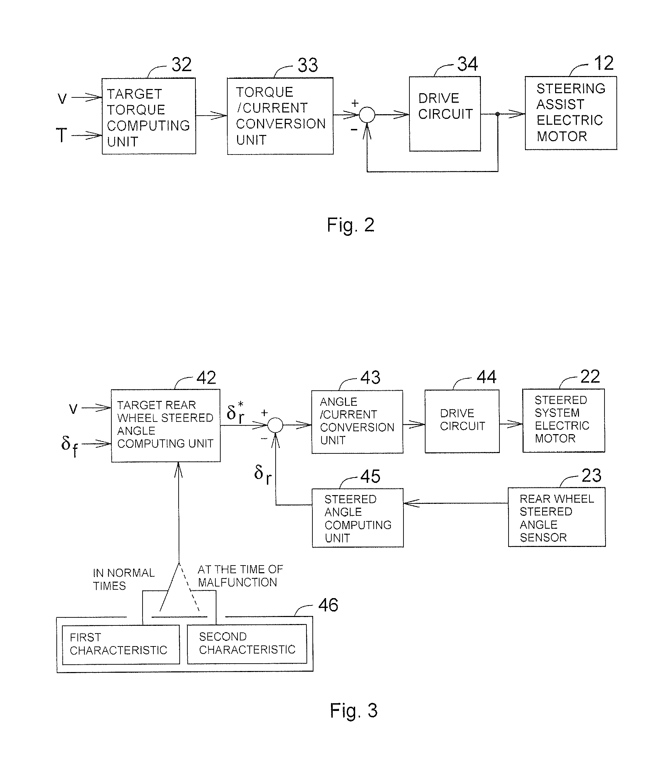

FIG. 2 shows a control block diagram of the steering assist control unit 31. Sections of the steering assist control unit 31 other than a drive circuit 34 are formed of a microcomputer that includes a CPU and memories (such as a ROM and a RAM). The microcomputer functions as a plurality of functional processing units by executing predetermined programs.

The functional processing units include a target torque computing unit 32 and a torque/current conversion unit 33. The target torque computing unit 32 calculates a target motor torque that corresponds to the detected vehicle speed and steering torque, using the relationship of the target motor torque with respect to the detected steering torque, which is set in advance for each vehicle speed. The target motor torque takes a positive value when a steering assist force for steering the vehicle to the left should be generated by the steering assist electric motor 12, and takes a negative value when a steering assist force for steering the vehicle to the right should be generated by the steering assist electric motor 12. The target motor torque calculated by the target torque computing unit 32 is provided to the torque/current conversion unit 33.

The torque/current conversion unit 33 calculates a current that should be passed through the steering assist electric motor 12 as a current command value. Specifically, the torque/current conversion unit 33 calculates a motor current command value by dividing the target motor torque calculated by the target torque computing unit 32 by a torque constant of the steering assist electric motor 12. The motor current command value calculated by the torque/current conversion unit 33 is provided to the drive circuit 34 that operates with the use of a thyristor, or the like. By the drive circuit 34, the motor current command value is converted into a PWM signal for driving the steering assist electric motor 12, and is provided to the steering assist electric motor 12.

FIG. 3 shows a control block diagram of the steered system control unit 41. The steered system control unit 41 includes a target rear wheel steered angle computing unit 42, an angle/current conversion unit 43, a motor drive circuit 44, a steered angle computing unit 45, and a storage unit 46. The target rear wheel steered angle computing unit 42 computes a target rear wheel steered angle δr^{*} using the vehicle speed v acquired from the wheel speed sensor 16 and the steering angle δf acquired from the steering angle sensor 4. The steered angle computing unit 45 calculates a rear wheel steered angle on the basis of a detection signal from the rear wheel steered angle sensor 23. The storage unit 46 stores the target rear wheel steered angle δr^{*} with respect to the steering angle δf, which is set in advance for each vehicle speed.

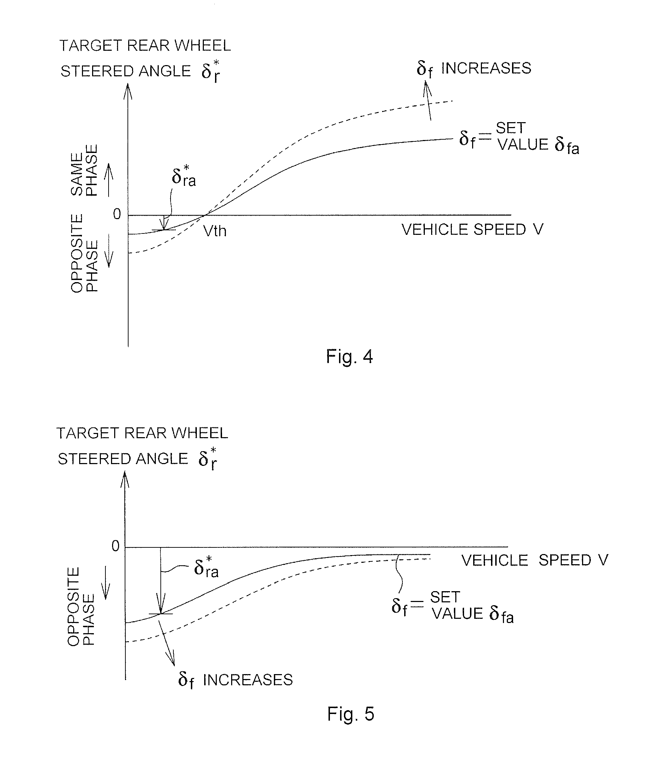

Sections of the steered system control unit 41 other than the drive circuit 44 are formed of a microcomputer that includes a CPU and memories (such as a ROM and a RAM). The microcomputer functions as a plurality of functional processing units by executing predetermined programs. The target rear wheel steered angle computing unit 42 calculates a target rear wheel steered angle δr^{*} that corresponds to the detected vehicle speed and steering angle, using the relationship of the target rear wheel steered angle δr^{*} with respect to the steering angle δf, which is set in advance for each vehicle speed and stored in the storage unit 46. The relationship of the target rear wheel steered angle δr^{*} with respect to the steering angle δf is illustrated in FIG. 4 and FIG. 5.

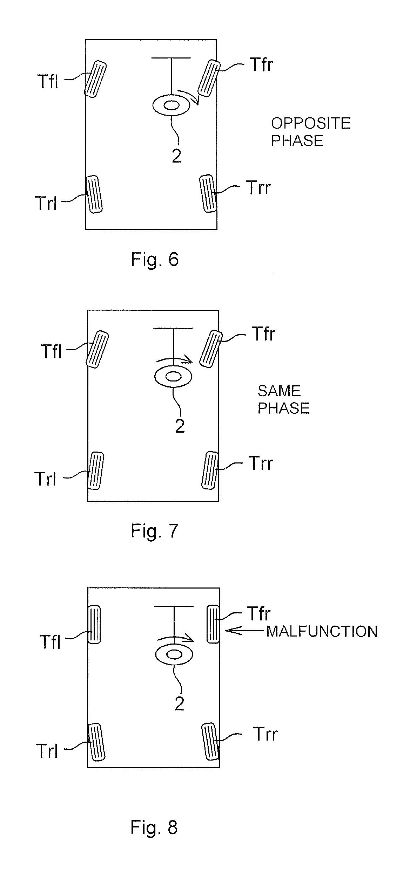

FIG. 4 is a graph that shows the relationship between the vehicle speed and the target rear wheel steered angle δr^{*} when the steering assist control unit 31 does not have any malfunction, that is, in normal times. The relationship shown in this graph is stored in the storage unit 46 as a "first characteristic". Within a range of vehicle speed from 0 to a relatively low reference vehicle speed vth (set to approximately 30 km/h, for example), the target rear wheel steered angle δr^{*} is controlled so as to be opposite in phase from the front wheel steered angle δf in order to allow the vehicle to quickly turn in a small radius. The relationship between the direction (phase) of the front tires Tfr, Tfl and the direction (phase) of the rear tires Trr, Trl in this case is shown in FIG. 6.

When the vehicle speed exceeds the reference vehicle speed vth, the target rear wheel steered angle δr^{*} is controlled so as to be in the same phase as the front wheel steered angle δf in order to provide maneuverability with a sense of unity between the driver and the vehicle and stability with a sense of trust at a high speed. The relationship between the direction (phase) of the front tires Tfr, Tfl and the direction (phase) of the rear tires Trr, Trl in this case is shown in FIG. 7.

In some cases, the steering assist control unit 31 does not function properly due to, for example, a malfunction of the torque sensor 10 or a malfunction of the steering assist electric motor 12. In this case, the steered system control unit 41 no longer receives, from the steering assist control unit 31, a signal indicating that the steering assist control unit 31 is operating properly, and recognizes that the steering assist control unit 31 is malfunctioning.

In this case, the target rear wheel steered angle computing unit 42 calculates the target rear wheel steered angle δr^{*} that corresponds to the detected vehicle speed and steering angle using the graph that shows the relationship between the vehicle speed and the target rear wheel steered angle δr^{*}, which is prepared for a case where the steering assist control unit 31 malfunctions. The relationship shown in the graph of FIG. 5 is stored in the storage unit 46 as a "second characteristic". According to the "second characteristic", within the entire vehicle speed range, the target rear wheel steered angle δr^{*} is controlled so as to be opposite in phase from the front wheel steered angle δf. As a result, as shown in FIG. 8, even when the driver attempts to rotate the steering member 2 in a certain direction but the steering member 2 is so heavy (is so hard to rotate) that the front wheel are hardly steered, it is possible to steer the rear wheels in the direction opposite to the direction in which the steering member 2 is attempted to be rotated. As a result, it is possible to steer the vehicle in the direction intended by the driver.

However, because the steering assist control unit 31 malfunctions, the steering member 2 is heavy (is hard to rotate). Therefore, the driver is not able to steer the steering member 2 by a large angle. Accordingly, in the "second characteristic", the ratio of a target rear wheel steered angle δra^{*} to a certain steering angle δfa of the steering member 2 (δra^{*}/δfa) (this is referred to as "control gain of the target rear wheel steered angle computing unit 42") is desirably set larger than a control gain of the target rear wheel steered angle computing unit 42 in the "first characteristic".

In this way, even when the steering assist control unit 31 malfunctions, it is possible to turn the vehicle through an operation of the steering member 2 that has become heavy. Thus, it is possible to make a turn that reflects the driver's intention as much as possible. Note that, even when the control gain of the target rear wheel steered angle computing unit 42 is set to a large value, the front wheels are hardly to be steered and it is difficult to achieve a large turning angle unlike in the case where the front wheels are steered. However, it is possible to obtain an advantageous effect that the steering feel is not impaired significantly as long as the steering angle of the steering member 2 is around zero (the neutral position) (for example, smaller than or equal to ±5 degrees with respect to zero (the neutral position)).

In addition, according to the "second characteristic", the rear wheel steered angle when the rear wheels are controlled to be steered only on the side where the target rear wheel steered angle is opposite in phase from the steering angle of the steering member, are controlled to be changed on the basis of the vehicle speed. That is, the target rear wheel steered angle δr^{*} is increased as the vehicle speed decreases, and the target rear wheel steered angle δr^{*} is reduced as the vehicle speed increases. In this way, a higher priority is given to the turning performance at a low speed, and a higher priority is given to steering stability at a high speed.

As described above, in the vehicle that includes the four-wheel steering control system 1, even when the EPS electric motor control function fails and is not performed properly, it is possible to make a vehicle turn that reflects the driver's intention as much as possible during travelling, by utilizing the function of steering the rear wheels.

One embodiment of the invention has been described above. However, the invention is not limited to the above-described embodiment. For example, the steered system control unit 41 may be configured to calculate the target rear wheel steered angle δr^{*} on the basis of the steering torque detected by the torque sensor 10 instead of the steering angle acquired from the steering angle sensor 4 or in addition to the steering angle acquired from the steering angle sensor 4, and then to execute drive control of the steered system electric motor 22 such that the target rear wheel steered angle δr^{*} is achieved.

In the above-described embodiment, the steering assist control unit 31 computes an assist force for steering the front wheels on the basis of the value detected by the torque sensor 10. Alternatively, the steering assist control unit 31 may be configured to compute an assist force for steering the front wheels on the basis of the value detected by the steering angle sensor 4 in addition to the value detected by the torque sensor 10 or instead of the value detected by the torque sensor 10.

In the above-described embodiment, the steering assist control unit 31 computes an assist force for steering the front wheels. However, in a vehicle that is configured to steer the rear wheels with the steering member 2, a steering assist control unit may be configured to compute an assist force for steering the rear wheels and a steered system control unit may be configured to execute steered control of the front wheels.

## Claims

1. A four-wheel steering control system that includes: a steering member; a torque sensor that detects a steering torque based on an operation of the steering member; a steering angle sensor that detects a steering angle of the steering member; a steering assist control unit that computes an assist force for steering one of a pair of front wheels and a pair of rear wheels based on at least one of a value detected by the torque sensor and a value detected by the steering angle sensor; and a steered system control unit that executes steered control on the other one of the pair of front wheels and the pair of rear wheels based on at least one of the value detected by the steering angle sensor and the value detected by the torque sensor, **characterized in that**
when it is determined that there is a failure in a function of the steering assist control unit, the steered system control unit executes the steered control such that the other one of the pair of front wheels and the pair of rear wheels is steered only on a side where a steered angle of the other one of the pair of front wheels and the pair of rear wheels is opposite in phase from the steering angle of the steering member.

2. The four-wheel steering control system according to claim 1, wherein, in a case where the steering angle of the steering member is the same value, the steered system control unit sets a ratio, to a given steering angle of the steering member, of the steered angle of the other one of the pair of front wheels and the pair of rear wheels when it is determined that there is a failure in the function of the steering assist control unit and the other one of the pair of front wheels and the pair of rear wheels is controlled to be steered only on the side where the steered angle is opposite in phase from the steering angle of the steering member, larger than a ratio, to the given steering angle of the steering member, of the steered angle when it is determined that there is no failure in the function of the steering assist control unit and the other one of the pair of front wheels and the pair of rear wheels is controlled to be steered on the side where the steered angle of the other one of the pair of front wheels and the pair of rear wheels is opposite in phase from the steering angle of the steering member.

3. The four-wheel steering control system according to claim 2, wherein the steered system control unit controls the steered angle of the other one of the pair of front wheels and the pair of rear wheels when it is determined that there is a failure in the function of the steering assist control unit and the other one of the pair of front wheels and the pair of rear wheels is controlled to be steered only on the side where the steered angle is opposite in phase from the steering angle of the steering member such that the steered angle is changed based on a vehicle speed.

4. The four-wheel steering control system according to claim 3, wherein the steered system control unit controls the steered angle of the other one of the pair of front wheels and the pair of rear wheels when it is determined that there is a failure in the function of the steering assist control unit and the other one of the pair of front wheels and the pair of rear wheels is controlled to be steered only on the side where the steered angle is opposite in phase from the steering angle of the steering member such that the steered angle is increased as the vehicle speed decreases.
